# EUROPÄISCHE PATENTANMELDUNG

(11) **EP 3 457 551 A1**
(43) Veröffentlichungstag der Anmeldung: **20.03.2019**
(21) Anmeldenummer: 17191092.0
(22) Anmeldetag: 14.09.2017
(51) Int. Cl.: H02M 5/458, H02M 7/797, H02M 1/00

(54) **STROMRICHTERANORDNUNG ZUR KOPPLUNG VON SPANNUNGSZWISCHENKREISEN**

(71) Anmelder: Siemens Aktiengesellschaft, 80333 München (DE)
(72) Erfinder: Ehrentraut, Marco, 09116 Chemnitz (DE); Lange, Robert, 08451 Crimmitschau (DE); Mehlich, Jan, 09126 Chemnitz (DE); Schrepfer, Armin, 91054 Erlangen (DE); Strobelt, Holger, 08328 Stützengrün (DE)

(57) **Zusammenfassung**

Die Erfindung betrifft eine Stromrichteranordnung zur Kopplung von Spannungszwischenkreisen. Der Spannungszwischenkreis eines ersten Umrichters ist hierbei mit dem Spannungszwischenkreis eines zweiten Umrichters mit wenigstens einer Verbindungsleitung (ZKK1, ZKK2) elektrisch verbunden. Die Verbindungsleitung weist wenigstens ein Halbleiterbauelement (DK1... DK8) zur Erzeugung eines Spannungsabfalls auf.

## Beschreibung

Die Erfindung betrifft eine Stromrichteranordnung umfassend wenigstens einen ersten Umrichter und wenigstens einen zweiten Umrichter, wobei die Umrichter jeweils einen wenigstens einen Kondensator aufweisenden Spannungszwischenkreis aufweisen und wobei der Spannungszwischenkreis des ersten Umrichters mit dem Spannungszwischenkreis des zweiten Umrichters mit wenigstens einer Verbindungsleitung elektrisch verbunden ist.

Elektrische Antriebe sind meist als elektrische Maschinen ausgebildet, die mittels eines Umrichters elektrische Energie aus einem Energieversorgungsnetz beziehen.

Dies bedeutet im Wesentlichen: Elektrische Maschinen werden mittels eines Umrichters an einem Wechselspannungsnetz betrieben. Dieser Umrichterbetrieb ermöglicht einen drehzahlvariablen Betrieb der als Motor oder Generator arbeitenden elektrischen Maschine. Das Wechselspannungsnetz kann hierbei ein einphasiges oder ein dreiphasiges Wechselspannungsnetz sein. Der Umrichter richtet hierbei eine im Wechselspannungsnetz vorherrschende Frequenz in eine Frequenz um, die für den Betrieb der elektrischen Maschine benötigt wird. Häufig wird diese Art von Umrichtern auch als Frequenzumrichter bezeichnet.

Der Umrichter umfasst einen netzseitigen Stromrichter sowie einen lastseitigen Stromrichter. Sogenannte Spannungszwischenkreisumrichter weisen zudem einen Spannungszwischenkreis mit einem Spannungszwischenkreiskondensator auf. Zudem kann optional eine Vorladeschaltung im Spannungszwischenkreis realisiert sein.

Der netzseitige Stromrichter ist in den meisten Fällen ein Gleichrichter, der dreiphasige Wechselspannung - typischerweise mittels einer B6 Brückenschaltung - in Gleichspannung umwandelt. Der lastseitige Stromrichter ist als Wechselrichter ausgeführt und wandelt die Gleichspannung im Spannungszwischenkreis in eine von der elektrischen Maschine benötigte Wechselspannung.

Durch eine Belastung des elektrischen Antriebs, beispielsweise beim Beschleunigen, wird dem Energieversorgungsnetz mittels des Umrichters elektrische Energie entnommen. Die elektrische Maschine arbeitet in diesem Fall im motorischen Betrieb.

Soll der elektrische Antrieb hingegen abgebremst werden, muss der elektrischen Maschine Energie entzogen werden. Sie elektrische Maschine arbeitet in diesem Fall im generatorischen Betrieb. Eine Umwandlung der frei werdenden elektrischen Energie in Wärme mittels eines Bremswiderstandes ist hierbei möglich. Eine weitaus energieeffizientere Möglichkeit stellt beispielsweise eine Rückspeisung der freiwerdenden Bremsenergie ins Energieversorgungsnetz mittels eines meist sehr teuren rückspeisefähigen Umrichters dar.

Da elektrische Antriebe häufig in einen Antriebsverband von wenigstens zwei elektrischen Antrieben und somit auch wenigstens zwei Umrichtern integriert sind, werden die Spannungszwischenkreise der Umrichter gekoppelt. Arbeitet einer bzw. ein Teil der gekoppelten elektrischen Antriebe im generatorischen Betrieb und ein anderer bzw. ein anderer Teil der gekoppelten elektrischen Antriebe im motorischen Betrieb, erfolgt ein Energieausgleich direkt im gemeinsamen Spannungszwischenkreis. Das Energieversorgungsnetz wird nur mit einem resultierenden Energiebedarf des gekoppelten Antriebsverbands belastet.

Auf diese Weise können die gleichzeitig auftretende Bremsenergie und Beschleunigungsenergie effizient genutzt werden, ohne eine Be- oder sogar Überlastung des Energieversorgungsnetzes hervorzurufen.

Der Stand der Technik umfasst einerseits eine harte Kopplung der Spannungszwischenkreise. Andererseits wird auch eine Zwischenkreiskopplung über einen Widerstand oder auch eine Drossel angewendet. Diese beiden Kopplungsarten bringen jedoch einige Nachteile mit sich.

Die harte Kopplung führt insbesondere bei Geräten unterschiedlicher Leistungsklassen zu einer unausgewogenen Lastverteilung auf die netzseitigen Stromrichter, was eine Überlastung und schnellere Alterung der netzseitigen Stromrichter und der Vorladeschaltungen zur Folge hat.

Die netzseitigen Stromrichter sind überwiegend als passive Eingangsgleichrichter ausgeführt. Bei Belastung kann die harte Kopplung dazu führen, dass ein kleinerer Umrichter, der für eine kleinere Last ausgelegt ist, einen größeren Umrichter, der für eine größere Last ausgelegt ist, über den eigenen Brückengleichrichter mit versorgt. Dies kann zu einer Überlastung oder sogar einer Zerstörung des Brückengleichrichters des kleineren Umrichters führen.

Für eine Aufteilung der Last sind Unterschiede bezüglich Schleusenspannung, differentiellem Widerstand oder Bahnwiderstand der Dioden aller Eingangsgleichrichter sowie verschieden große Spannungsabfälle zwischen Eingangsklemmen und Spannungszwischenkreis verantwortlich. Da die Schleusenspannung und der Bahnwiderstand zudem temperaturabhängig sind, führen unterschiedliche Temperaturen zu einer unerwünschten Aufteilung der Last.

Mittels Überdimensionierung, insbesondere der netzseitigen Stromrichter, oder Leistungsherabsetzung wird versucht, diesen Risiken entgegenzuwirken. Jedoch ist dies mit einem erhöhten Kostenaufwand verbunden.

Die Zwischenkreiskopplung über einen Widerstand reduziert ein Überlastungsrisiko eines Brückengleichrichters, führt aber zu einer reduzierten Dynamik beim Energieausgleich, da die Ausgleichsströme zum gemeinsamen Spannungszwischenkreis mittels des Widerstands begrenzt werden. Zudem wirkt sich die hohe Verlustleistung des Widerstands negativ auf eine Energieeffizienz aus. Tritt in einem Gerät ein Kurzschluss auf, sind auch bei dieser Kopplungsart hohe Ausgleichsströme zu erwarten, die eine Schädigung der Komponenten und Leitungen verursachen.

Der Erfindung liegt daher die Aufgabe zugrunde, die Spannungszwischenkreise zweier Umrichter verlustarm und bei hoher Dynamik zu koppeln und zudem das Risiko von hohen Ausgleichsströmen zu reduzieren.

Die Lösung der Aufgabe gelingt durch eine Stromrichteranordnung umfassend wenigstens einen ersten Umrichter und wenigstens einen zweiten Umrichter, wobei die Umrichter jeweils einen wenigstens einen Kondensator aufweisenden Spannungszwischenkreis aufweisen, wobei der Spannungszwischenkreis des ersten Umrichters mit dem Spannungszwischenkreis des zweiten Umrichters mit wenigstens einer Verbindungsleitung elektrisch verbunden ist und wobei die Verbindungsleitung wenigstens ein Halbleiterbauelement zur Erzeugung eines Spannungsabfalls aufweist.

Die Verbindungsleitung verbindet vorzugsweise einen Pluspol des Spannungszwischenkreises des ersten Umrichters mit einem Pluspol des Spannungszwischenkreises des zweiten Umrichters oder einen Minuspol des Spannungszwischenkreises des ersten Umrichters mit einem Minuspol des Spannungszwischenkreises des zweiten Umrichters.

In einer bevorzugten Ausführung verbindet eine erste Verbindungsleitung den Pluspol des Spannungszwischenkreises des ersten Umrichters mit dem Pluspol des Spannungszwischenkreises des zweiten Umrichters und eine zweite Verbindungsleitung den Minuspol des Spannungszwischenkreises des ersten Umrichters mit dem Minuspol des Spannungszwischenkreises des zweiten Umrichters.

In einem Antriebsverband, der mehr als zwei Umrichter umfasst, sind entsprechend mehr Verbindungsleitungen zur Kopplung der Zwischenkreise nötig.

Vorzugsweise weist die Verbindungsleitung wenigstens eine Antiparallelschaltung von zwei Halbleiterbauelementen auf. Die Antiparallelschaltung eignet sich besonders gut für stromrichtungsabhängige Halbleiterbauelemente, da dadurch eine Stromführung in beide Stromrichtungen ermöglicht wird.

Die Verbindungsleitung weist vorzugsweise wenigstens eine Antiparallelschaltung von zwei Dioden auf. Jedoch ist auch eine Antiparallelschaltung von mehr als zwei Dioden möglich. Ferner ist auch denkbar, dass die Verbindungsleitung zwei oder mehr Antiparallelschaltungen von wenigstens zwei Dioden aufweist. Dies bietet sich an, wenn ein höherer Spannungsabfall benötigt wird, da sich die Spannungsabfälle von in Reihe geschalteten Dioden addieren.

Dioden als stromrichtungsabhängige und vor allem preiswerte Halbleiterbauelemente eignen sich besonders gut, da bei einer kleinen anliegenden Spannung nur ein kleiner Strom fließt. Ein pn-Übergang der Diode ist noch sehr hochohmig. Mit steigender Spannung steigt zunächst auch der Strom leicht. Ab einer bestimmten Durchlassspannung, der sogenannten Schleusenspannung, steigt der Strom merklich an. Der pn-Übergang öffnet sich für einen Stromfluss, die Diode ist nun niederohmig.

Aufgrund dieser Eigenschaften eignet sich die Diode besonders gut für die Erfindung.

Ist eine Spannungsdifferenz zwischen einer Spannung des Spannungszwischenkreises des ersten Umrichters und einer Spannung des Spannungszwischenkreises des zweiten Umrichters nur gering, fließt kein oder nur ein geringer Ausgleichsstrom.

Überschreitet die Spannungsdifferenz die Schleusenspannung, wie es bei einem Abbremsen einer elektrischen Maschine zu erwarten ist, kann der Ausgleichsstrom fließen.

Je nach Anwendung und gewünschten Eigenschaften können verschiedene Dioden eingesetzt werden. Beispielsweise ist bei Siliziumdioden eine Schleusenspannung von ca. 0,7 V typisch. Wird die Schleusenspannung überschritten, steigt der Strom sehr schnell an. Bei Germaniumdioden, die eine Schleusenspannung von ca. 0,3 V aufweisen, steigt der Strom nach Überschreiten der Schleusenspannung wesentlich langsamer an als bei Siliziumdioden.

Durch die Verbindungsleitung mit wenigstens einem Halbleiterbauelement entsteht ein definierter Spannungsabfall und eine direkte Parallelschaltung der Dioden der netzseitigen Stromrichter ist im Vergleich zur harten Kopplung aufgehoben.

Die Überlastung eines oder mehrerer netzseitiger Stromrichter bzw. eines oder mehrerer Eingangsgleichrichter wird auf ein Minimum reduziert oder ganz verhindert. Jeder Eingangsgleichrichter versorgt nur sein eigenes Gerät, weshalb dieser nicht überlastet wird und nicht vorzeitig altert.

Die Erfindung ermöglicht, dass die beim Abbremsen einer elektrischen Maschine im Antriebsverband freiwerdende elektrische Energie zur Beschleunigung einer anderen im Antriebsverband elektrischen Maschine eingesetzt werden kann. Somit muss die Bremsenergie nicht in Wärme umgewandelt werden, was überhaupt einen bzw. einen größeren Bremswiderstand erfordern würde, aufgrund der hohen Verlustleistung des Bremswiderstands ökonomisch höchst ineffizient wäre und zusätzliche Kosten für eine Schaltschrankentwärmung verursachen würde.

Die Erfindung ebnet den Weg für einen energieeffizienten Antriebsverband, der sogar imstande ist, einen teuren rückspeisefähigen Umrichter zu ersetzen.

Zudem müssen die netzseitigen Stromrichter nicht länger überdimensioniert werden, was sich positiv auf die Kosten des Umrichters auswirkt. Die bei Überdimensionierung der netzseitigen Stromrichter auftretenden zusätzlichen Verluste müssen nicht mehr durch zusätzliche oder überdimensionierte kostenintensive Kühlkörper kompensiert werden.

Zudem macht die Erfindung einen Verzicht auf Anpassung der Aufladezeitkonstanten, die sich unter anderem aus den Zwischenkreiskapazitäten und Belastungen der Umrichter ergeben, möglich. Ferner können mittels der Erfindung auch Umrichter unterschiedlicher Leistungsklassen ohne Begrenzung eines Leistungsunterschieds effizient miteinander gekoppelt werden.

Die Erfindung bietet den Vorteil, dass kostengünstige Dioden eingesetzt werden können, die eine Mehrbelastung der Umrichter verhindern.

Jedoch besteht auch die Möglichkeit, andere Halbleiterbauelemente zu verwenden. Für die Erfindung eignen sich mitunter verschiedene Arten von Transistoren wie IGBTs, Bipolartransistoren, MOSFETs oder auch Zener-Dioden.

Zudem ist auch eine Verwendung von TRIACs oder Thyristoren möglich.

Die beschriebene Zwischenkreiskopplung mittels Halbleitern, insbesondere Dioden, weist eine hohe Dynamik und geringe Verluste auf.

Zudem ist auch eine Stromrichteranordnung möglich, bei welcher die Verbindungsleitung wenigstens einen in Reihe zu der Antiparallelschaltung von zwei Halbleiterbauelementen geschalteten Widerstand aufweist.

Vorzugsweise ist die Stromrichteranordnung wie nachfolgend beschrieben aufgebaut: Eine erste Verbindungsleitung verbindet den Pluspol des Spannungszwischenkreises des ersten Umrichters mit dem Pluspol des Spannungszwischenkreises des zweiten Umrichters und eine zweite Verbindungsleitung verbindet den Minuspol des Spannungszwischenkreises des ersten Umrichters mit dem Minuspol des Spannungszwischenkreises des zweiten Umrichters.

Für die Realisierung der Stromrichteranordnung bieten sich verschiedene Möglichkeiten an.

Eine erste Möglichkeit stellt die folgende Stromrichteranordnung dar: Die erste Verbindungsleitung weist genau eine Antiparallelschaltung von genau zwei Dioden auf und die zweite Verbindungsleitung weist genau eine Antiparallelschaltung von zwei Dioden auf. Diese Stromrichteranordnung kann bei Antriebsverbänden eingesetzt werden, die Umrichter wenig unterschiedlicher Leistungsklassen beinhalten, weil ein Spannungsunterschied bei Verwendung von jeweils nur einer Antiparallelschaltung von zwei Dioden pro Verbindungsleitung nur gering ist. Stark unsymmetrische Lasten können so nur schlecht entkoppelt werden.

Diese Stromrichteranordnung wird vorteilhaft genutzt, wenn keine großen Spitzenströme bei einer Netzunterbrechung und wiederkehrender Netzspannung zu erwarten sind.

Eine zweite Möglichkeit stellt die folgende Stromrichteranordnung dar: Die erste Verbindungsleitung weist genau eine Antiparallelschaltung von genau zwei Dioden und einen in Reihe geschalteten Widerstand auf und die zweite Verbindungsleitung weist genau eine Antiparallelschaltung von zwei Dioden und einen in Reihe geschalteten Widerstand auf.

Dies bietet den Vorteil, dass eine Durchgangskennlinie der erläuterten Anordnung durch den zusätzlichen Widerstand weniger steil ist. Dadurch kann eine Überlastung eines leistungsschwächeren Eingangsgleichrichters verhindert werden. Zudem können bei kurzzeitiger Netzunterbrechung und anschließender Netzwiederkehr auftretende Spitzenströme verringert werden. Außerdem werden auf diese Weise die Eingangsgleichrichter sowie die Dioden in den Verbindungsleitungen weniger stark belastet.

Eine dritte Möglichkeit stellt die folgende Stromrichteranordnung dar: Die erste Verbindungsleitung weist genau zwei Antiparallelschaltungen von jeweils genau zwei Dioden auf und die zweite Verbindungsleitung genau zwei Antiparallelschaltungen von jeweils genau zwei Dioden auf.

Diese Stromrichteranordnung wird vorzugsweise eingesetzt, wenn die Spannungsdifferenz zwischen der Spannung des Spannungszwischenkreises des ersten Umrichters und der Spannung des Spannungszwischenkreises des zweiten Umrichters erst ab einem höheren Differenzwert mittels Ausgleichströmen ausgeglichen werden soll. Da bei dieser Stromrichteranordnung in einer Stromrichtung zwei Dioden in Reihe geschaltet sind, ist die Schleusenspannung höher. Daher wird diese Stromrichteranordnung vornehmlich bei sehr unterschiedlichen Leistungsklassen und/oder stark unterschiedlichen Spannungszwischenkreiskapazitäten eingesetzt.

Es ist auch möglich, die Verbindungsleitungen mit drei oder mehr Parallelschaltungen von zwei oder mehr Dioden auszustatten.

Eine vierte Möglichkeit stellt die folgende Stromrichteranordnung dar: Die erste Verbindungsleitung weist genau zwei Antiparallelschaltungen von jeweils genau zwei Dioden und jeweils wenigstens einem in Reihe geschalteten Widerstand auf und die zweite Verbindungsleitung weist genau zwei Antiparallelschaltungen von jeweils genau zwei Dioden und jeweils wenigstens einem in Reihe geschalteten Widerstand auf.

Diese Stromrichteranordnung eignet sich besonders gut bei großen Leistungsunterschieden der Umrichter sowie bei sich stark unterscheidenden Spannungszwischenkreiskapazitäten.

Es ist auch möglich, die Verbindungsleitungen mit drei oder mehr Widerständen auszustatten.

Im Folgenden wird die Erfindung anhand der in den Figuren dargestellten Ausführungsbeispiele näher beschrieben und erläutert. Es zeigen:
- FIG 1: eine Stromrichteranordnung zur Zwischenkreiskopplung nach dem Stand der Technik,
- FIG 2: eine Ausgestaltung der Stromrichteranordnung zur Zwischenkreiskopplung mit zwei Parallelschaltungen von jeweils zwei Dioden,
- FIG 3: eine Ausgestaltung der Stromrichteranordnung zur Zwischenkreiskopplung mit zwei Parallelschaltungen von jeweils zwei Dioden, wobei die Parallelschaltungen jeweils in Reihe zu einem Widerstand geschaltet sind,
- FIG 4: eine Ausgestaltung der Stromrichteranordnung zur Zwischenkreiskopplung mit einer Parallelschaltung, umfassend zwei Dioden, in Reihe zu einem Widerstand,
- FIG 5: eine detailliert dargestellte Ausgestaltung der bereits in FIG 2 dargestellten Stromrichteranordnung zur Zwischenkreiskopplung.

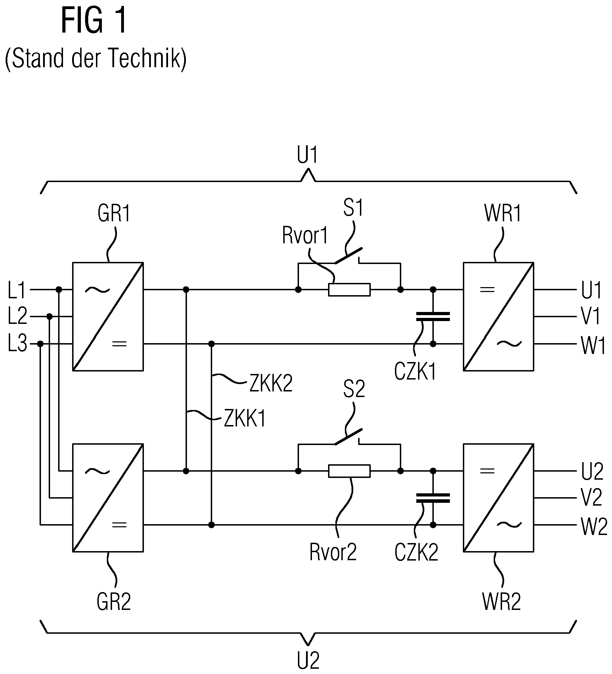

FIG 1 zeigt eine Stromrichteranordnung zur Zwischenkreiskopplung nach dem Stand der Technik. Ein erster Umrichter U1 und ein zweiter Umrichter U2 sind an ein elektrisches Energieversorgungsnetz mit den drei Phasen L1, L2 und L3 angebunden. Der Umrichter U1 umfasst als netzseitigen Stromrichter einen Eingangsgleichrichter GR1 und als lastseitigen Stromrichter einen Wechselrichter WR1.

Der Wechselrichter WR1 stellt drei Phasen U1, V1 und W1 bereit, die einem Anschluss einer dreiphasigen Last, insbesondere einer elektrischen Maschine, dienen.

Ein Spannungszwischenkreis zwischen den beiden Stromrichtern weist einen Kondensator, auch Spannungszwischenkreiskondensator, CZK1 und eine optionale Vorladeschaltung, die einen Vorladewiderstand Rvor1 und einen Schalter S1 umfasst, auf. Der Umrichter U2 hingegen umfasst als netzseitigen Stromrichter einen Eingangsgleichrichter GR2 und als lastseitigen Stromrichter einen Wechselrichter WR2.

Der Wechselrichter WR2 stellt drei Phasen U2, V2 und W2 bereit, die einem Anschluss einer dreiphasigen Last, insbesondere einer elektrischen Maschine, dienen.

Ein Spannungszwischenkreis zwischen den beiden Stromrichtern weist einen Spannungszwischenkreiskondensator CZK2 und eine optionale Vorladeschaltung, die einen Vorladewiderstand Rvor2 und einen Schalter S2 umfasst, auf. Die beiden Spannungszwischenkreise sind über zwei Verbindungsleitungen hart gekoppelt.

Die Verbindungsleitung ZKK1 verbindet in der Figur einen Pluspol des Spannungszwischenkreises des Umrichters U1 mit einem Pluspol des Spannungszwischenkreises des Umrichters U2. Die Verbindungsleitung ZKK2 verbindet in der Figur einen Minuspol des Spannungszwischenkreises des Umrichters U1 mit einem Minuspol des Spannungszwischenkreises des Umrichters U2.

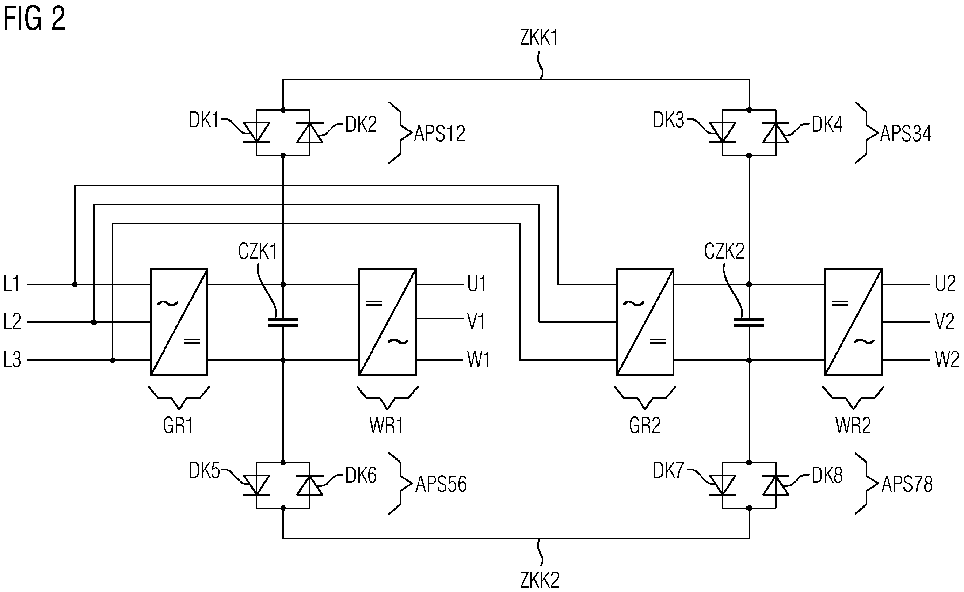

FIG 2 zeigt eine Ausgestaltung der Stromrichteranordnung zur Zwischenkreiskopplung mit zwei Parallelschaltungen von jeweils zwei Dioden.

Der erste Umrichter und der zweite Umrichter sind an ein elektrisches Energieversorgungsnetz mit den drei Phasen L1, L2 und L3 angebunden. Der erste Umrichter umfasst als netzseitigen Stromrichter den Eingangsgleichrichter GR1 und als lastseitigen Stromrichter den Wechselrichter WR1. Ein Spannungszwischenkreis zwischen den beiden Stromrichtern weist den Spannungszwischenkreiskondensator CZK1 auf.

Der zweite Umrichter umfasst als netzseitigen Stromrichter den Eingangsgleichrichter GR2 und als lastseitigen Stromrichter den Wechselrichter WR2. Ein Spannungszwischenkreis zwischen den beiden Stromrichtern weist einen Spannungszwischenkreiskondensator CZK2 auf.

Die beiden Spannungszwischenkreise sind über zwei Verbindungsleitungen gekoppelt. Die Verbindungsleitung ZKK1 verbindet in der Figur den Pluspol des Spannungszwischenkreises des ersten Umrichters mit dem Pluspol des Spannungszwischenkreises des zweiten Umrichters. Die Verbindungsleitung ZKK1 weist eine Antiparallelschaltung APS12 von zwei Dioden DK1 und DK2 sowie eine Antiparallelschaltung APS34 von zwei Dioden DK3 und DK 4 auf.

Die Verbindungsleitung ZKK2 verbindet in der Figur den Minuspol des Spannungszwischenkreises des ersten Umrichters mit dem Minuspol des Spannungszwischenkreises des zweiten Umrichters. Die Verbindungsleitung ZKK2 weist eine Antiparallelschaltung APS56 von zwei Dioden DK5 und DK6 sowie eine Antiparallelschaltung APS78 von zwei Dioden DK7 und DK8 auf.

Die in der Figur dargestellte Ausgestaltung der Zwischenkreiskopplung wird vorzugsweise dann eingesetzt, wenn die Spannungsdifferenz zwischen der Spannung des Spannungszwischenkreises des ersten Umrichters und der Spannung des Spannungszwischenkreises des zweiten Umrichters erst ab einem höheren Differenzwert mittels Ausgleichströmen ausgeglichen werden soll. Da bei dieser Stromrichteranordnung in einer Stromrichtung zwei Dioden in Reihe geschaltet sind, ist die Schleusenspannung höher. Dennoch ist eine hohe Dynamik bei geringen Verlusten gegeben.

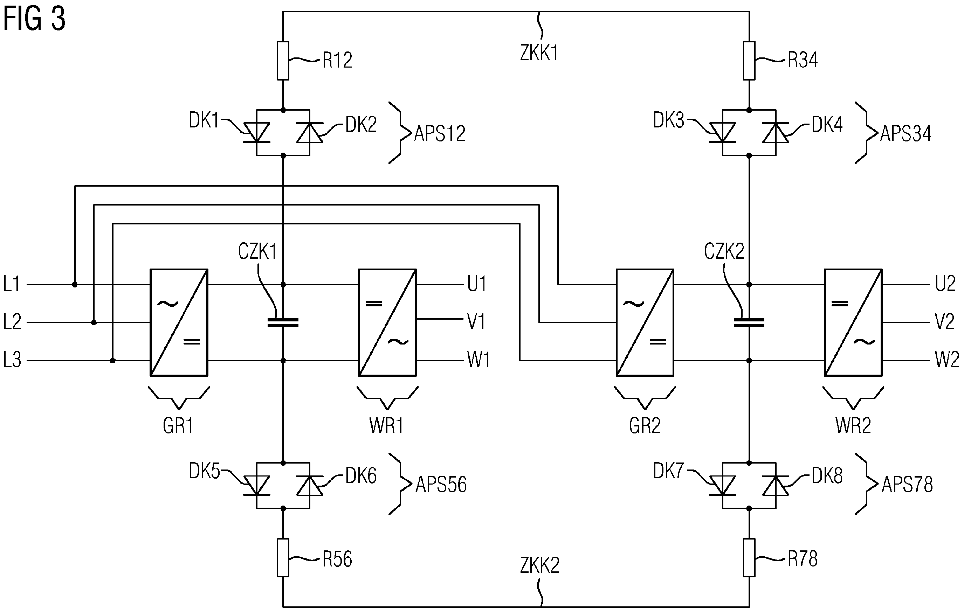

FIG 3 zeigt eine Ausgestaltung der Stromrichteranordnung zur Zwischenkreiskopplung mit zwei Parallelschaltungen von jeweils zwei Dioden, wobei die Parallelschaltungen jeweils in Reihe zu einem Widerstand geschaltet sind. Die in FIG 3 gezeigte Schaltung ist mit der bereits in FIG 2 erläuterten Schaltung nahezu identisch. Es kommen lediglich folgende Komponenten hinzu: In Reihe zur Antiparallelschaltung APS12 ist ein Widerstand R12 geschaltet, in Reihe zur Antiparallelschaltung APS34 ist ein Widerstand R34 geschaltet, in Reihe zur Antiparallelschaltung APS56 ist ein Widerstand R56 geschaltet und in Reihe zur Antiparallelschaltung APS78 ist ein Widerstand R78 geschaltet.

An den zusätzlichen Widerständen R12 ... R78 fällt Spannung ab. Dies führt zu geringeren Ausgleichsströmen bei unsymmetrischer Belastung. Ein weiterer Vorteil ist hierbei, dass große Spitzenströme bei kurzzeitiger Netzunterbrechung und wiederkehrender Netzspannung verhindert werden.

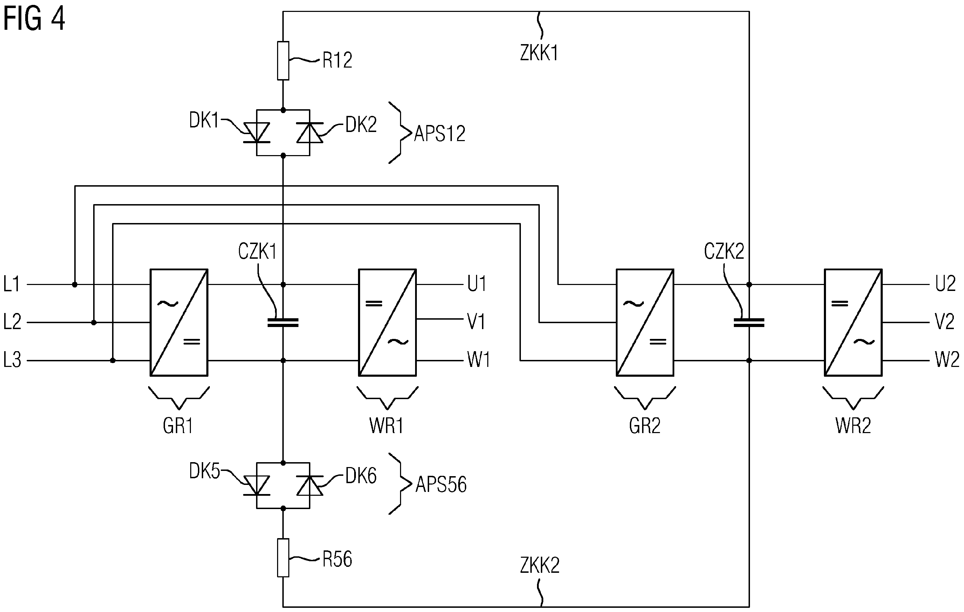

FIG 4 zeigt eine Ausgestaltung der Stromrichteranordnung zur Zwischenkreiskopplung mit einer Parallelschaltung, umfassend zwei Dioden, in Reihe zu einem Widerstand.

Der erste Umrichter und der zweite Umrichter sind in der Figur an das elektrische Energieversorgungsnetz mit den drei Phasen L1, L2 und L3 angebunden. Der erste Umrichter umfasst den Eingangsgleichrichter GR1 und den Wechselrichter WR1. Ein Spannungszwischenkreis zwischen den beiden Stromrichtern weist den Spannungszwischenkreiskondensator CZK1 auf. Der zweite Umrichter umfasst den Eingangsgleichrichter GR2 und den Wechselrichter WR2. Ein Spannungszwischenkreis zwischen den beiden Stromrichtern weist einen Spannungszwischenkreiskondensator CZK2 auf.

Die beiden Spannungszwischenkreise sind über zwei Verbindungsleitungen gekoppelt. Die Verbindungsleitung ZKK1 verbindet in der Figur den Pluspol des Spannungszwischenkreises des ersten Umrichters mit dem Pluspol des Spannungszwischenkreises des zweiten Umrichters. Die Verbindungsleitung ZKK1 weist eine Antiparallelschaltung APS12 von zwei Dioden DK1 und DK2 auf. In Reihe zur Antiparallelschaltung APS12 ist - wie in FIG 3 - der Widerstand R12 geschaltet.

Die Verbindungsleitung ZKK2 verbindet in der Figur den Minuspol des Spannungszwischenkreises des ersten Umrichters mit dem Minuspol des Spannungszwischenkreises des zweiten Umrichters. Die Verbindungsleitung ZKK2 weist eine Antiparallelschaltung APS56 von zwei Dioden DK5 und DK6 auf. In Reihe zur Antiparallelschaltung APS56 ist - wie in FIG 3 - der Widerstand R56 geschaltet.

Die in der Figur beschriebene Ausgestaltung eignet sich besonders gut bei Umrichtern, die Lasten versorgen, welche sich in ihrer Leistung stark unterscheiden.

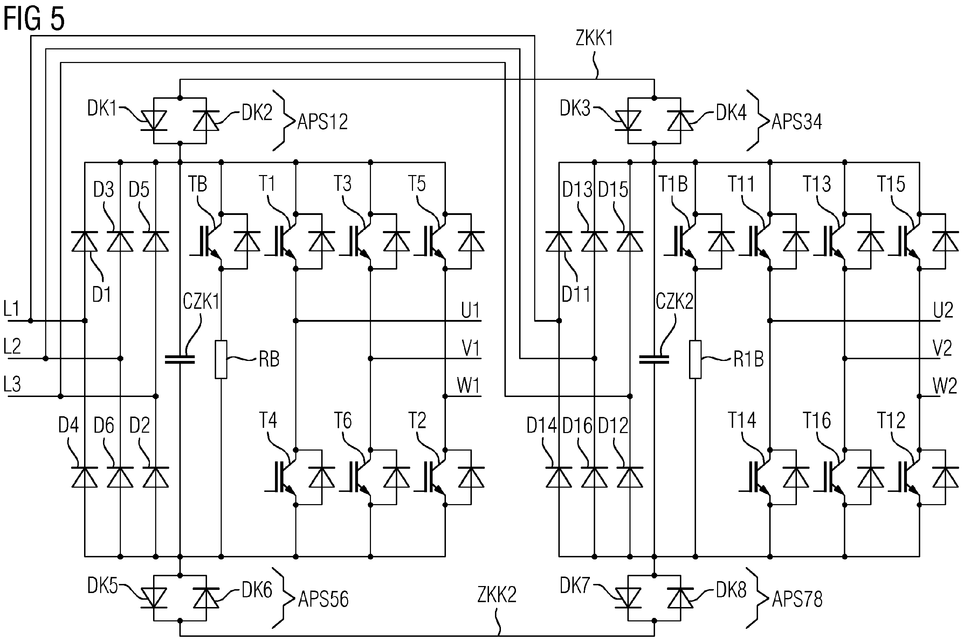

FIG 5 zeigt eine detailliert dargestellte Ausgestaltung der bereits in FIG 2 dargestellten Stromrichteranordnung zur Zwischenkreiskopplung.

Der erste Umrichter und der zweite Umrichter sind in der Figur an das elektrische Energieversorgungsnetz mit den drei Phasen L1, L2 und L3 angebunden.

Der erste Umrichter umfasst als Eingangsgleichrichter eine B6 Brückenschaltung mit den Dioden D1, D3, D5, D4, D6 und D2. Anstatt von Dioden können auch andere stromrichtungsabhängige elektronische Bauelemente eingesetzt werden wie beispielsweise Thyristoren.

Der Wechselrichter umfasst die Transistoreinheiten T1, T3, T5, T4, T6 und T2. In der Figur sind diese Transistoreinheiten T1 ... T6 als IGBTs (insulated-gate bipolar transistor, deutsch: Bipolartransistor mit isolierter Gate-Elektrode) mit antiparalleler Freilaufdiode dargestellt. Jedoch sind auch andere elektronische Bauelemente wie Bipolartransistoren oder Feldeffekttransistoren möglich.

Der Spannungszwischenkreis weist den Spannungszwischenkreiskondensator CZK1 auf.

Zudem zeigt die Figur auch einen Bremswiderstand RB, der über eine Transistoreinheit TB, umfassend einen Transistor oder ein anderes elektronisches Bauelement, mit antiparalleler Freilaufdiode angesteuert wird. Der Bremswiderstand RB kann aufgrund der Erfindung kleiner dimensioniert werden oder sogar samt der Transistoreinheit TB weggelassen werden.

Eine an den ersten Umrichter angeschlossene Last wird über die drei Phasen U1, V1 und W1 mit elektrischer Energie versorgt.

Der zweite Umrichter umfasst als Eingangsgleichrichter eine B6 Brückenschaltung mit den Dioden D11, D13, D15, D14, D16 und D12. Anstatt von Dioden können auch hier andere stromrichtungsabhängige elektronische Bauelemente eingesetzt werden wie beispielsweise Thyristoren. Der Wechselrichter umfasst die Transistoreinheiten T11, T13, T15, T14, T16 und T12. In der Figur sind diese Transistoreinheiten T11 ... T16 als IGBTs mit antiparalleler Freilaufdiode dargestellt. Jedoch sind auch hier andere elektronische Bauelemente wie Bipolartransistoren oder Feldeffekttransistoren möglich.

Der Spannungszwischenkreis weist den Spannungszwischenkreiskondensator CZK2 auf.

Zudem zeigt die Figur auch einen Bremswiderstand R1B, der über eine Transistoreinheit T1B, umfassend einen Transistor oder ein anderes elektronisches Bauelement, mit antiparalleler Freilaufdiode angesteuert wird. Der Bremswiderstand R1B kann aufgrund der Erfindung kleiner dimensioniert werden oder sogar samt der Transistoreinheit T1B weggelassen werden.

Eine an den zweiten Umrichter angeschlossene Last wird über die drei Phasen U2, V2 und W2 mit elektrischer Energie versorgt.

Die beiden Spannungszwischenkreise sind über zwei Verbindungsleitungen gekoppelt. Die Verbindungsleitung ZKK1 verbindet in der Figur den Pluspol des Spannungszwischenkreises des ersten Umrichters mit dem Pluspol des Spannungszwischenkreises des zweiten Umrichters. Die Verbindungsleitung ZKK1 weist eine Antiparallelschaltung APS12 von zwei Dioden DK1 und DK2 sowie eine Antiparallelschaltung APS34 von zwei Dioden DK3 und DK 4 auf.

Die Verbindungsleitung ZKK2 verbindet in der Figur den Minuspol des Spannungszwischenkreises des ersten Umrichters mit dem Minuspol des Spannungszwischenkreises des zweiten Umrichters. Die Verbindungsleitung ZKK2 weist eine Antiparallelschaltung APS56 von zwei Dioden DK5 und DK6 sowie eine Antiparallelschaltung APS78 von zwei Dioden DK7 und DK8 auf.

Die Vorteile einer derartigen Schaltung sind bereits in FIG 2 beschrieben.

## Patentansprüche

1. Stromrichteranordnung umfassend wenigstens einen ersten Umrichter (U1) und wenigstens einen zweiten Umrichter (U2), wobei die Umrichter jeweils einen wenigstens einen Kondensator aufweisenden Spannungszwischenkreis aufweisen, wobei der Spannungszwischenkreis des ersten Umrichters (U1) mit dem Spannungszwischenkreis des zweiten Umrichters (U2) mit wenigstens einer Verbindungsleitung (ZKK1, ZKK2) elektrisch verbunden ist,
**dadurch gekennzeichnet, dass** die Verbindungsleitung (ZKK1, ZKK2) wenigstens ein Halbleiterbauelement (DK1, DK2, DK3, DK4, DK5, DK6, DK7, DK8) zur Erzeugung eines Spannungsabfalls aufweist.

2. Stromrichteranordnung nach Anspruch 1, wobei die Verbindungsleitung (ZKK1) einen Pluspol des Spannungszwischenkreises des ersten Umrichters (U1) mit einem Pluspol des Spannungszwischenkreises des zweiten Umrichters (U2) verbindet.

3. Stromrichteranordnung nach einem der vorhergehenden Ansprüche, wobei die Verbindungsleitung (ZKK2) einen Minuspol des Spannungszwischenkreises des ersten Umrichters (U1) mit einem Minuspol des Spannungszwischenkreises des zweiten Umrichters (U2) verbindet.

4. Stromrichteranordnung nach einem der vorhergehenden Ansprüche, wobei die Verbindungsleitung (ZKK1, ZK2) wenigstens eine Antiparallelschaltung (APS12, APS34, APS56, APS78) von zwei Halbleiterbauelementen (DK1... DK8) aufweist.

5. Stromrichterschaltung nach einem der vorhergehenden Ansprüche, wobei die Verbindungsleitung (ZKK1, ZKK2) wenigstens eine Antiparallelschaltung (APS12... APS78) von zwei Dioden (DK1... DK8) aufweist.

6. Stromrichteranordnung nach einem der vorhergehenden Ansprüche, wobei die Verbindungsleitung (ZKK1, ZKK2) wenigstens einen in Reihe zu der Antiparallelschaltung von zwei Halbleiterbauelementen geschalteten Widerstand (R12, R34, R56, R78) aufweist.

7. Stromrichteranordnung nach einem der vorhergehenden Ansprüche, wobei eine erste Verbindungsleitung (ZKK1) den Pluspol des Spannungszwischenkreises des ersten Umrichters (U1) mit dem Pluspol des Spannungszwischenkreises des zweiten Umrichters (U2) verbindet und eine zweite Verbindungsleitung (ZKK2) den Minuspol des Spannungszwischenkreises des ersten Umrichters (U1) mit dem Minuspol des Spannungszwischenkreises des zweiten Umrichters (U2) verbindet.

8. Stromrichteranordnung nach Anspruch 7, wobei die erste Verbindungsleitung (ZKK1) genau eine Antiparallelschaltung (APS12) von genau zwei Dioden (DK1, DK2) aufweist und wobei die zweite Verbindungsleitung (ZKK2) genau eine Antiparallelschaltung (APS56) von zwei Dioden (DK5, DK6) aufweist.

9. Stromrichteranordnung nach Anspruch 7, wobei die erste Verbindungsleitung (ZKK1) genau eine Antiparallelschaltung (APS12) von genau zwei Dioden (DK1, DK2) und einen in Reihe geschalteten Widerstand (R12) aufweist und wobei die zweite Verbindungsleitung (ZKK2) genau eine Antiparallelschaltung (APS56) von zwei Dioden (DK5, DK6) und einen in Reihe geschalteten Widerstand (R56) aufweist.

10. Stromrichteranordnung nach Anspruch 7, wobei die erste Verbindungsleitung (ZKK1) genau zwei Antiparallelschaltungen (APS12, APS34) von jeweils genau zwei Dioden (DK1... DK4) aufweist und wobei die zweite Verbindungsleitung (ZKK2) genau zwei Antiparallelschaltungen (APS56, APS78) von jeweils genau zwei Dioden (DK5... DK8) aufweist.

11. Stromrichteranordnung nach Anspruch 7, wobei die erste Verbindungsleitung (ZKK1) genau zwei Antiparallelschaltungen (APS12, APS34) von jeweils genau zwei Dioden (DK1... DK4) und jeweils wenigstens einem in Reihe geschalteten Widerstand (R12, R34) aufweist und wobei die zweite Verbindungsleitung (ZKK2) genau zwei Antiparallelschaltungen (APS56, APS78) von jeweils genau zwei Dioden (DK25... DK8) und jeweils wenigstens einem in Reihe geschalteten Widerstand (R56, R78) aufweist.
